# EUROPEAN PATENT APPLICATION

(11) **EP 4 425 888 A1**
(43) Date of publication of application: **04.09.2024**
(21) Application number: 22897161.0
(22) Date of filing: 06.07.2022
(51) Int. Cl.: H04L 67/10, H04L 67/60, H04L 45/745, G06F 9/54, G06F 9/50

(54) **DATA TRANSMISSION METHOD, COMPUTING DEVICE, AND COMPUTING SYSTEM**

(30) Priority: 25.11.2021 CN 202111413487; 09.03.2022 CN 202210234247
(71) Applicant: Huawei Technologies Co., Ltd., Shenzhen, Guangdong 518129 (CN)
(72) Inventor: LI, Sicong, Shenzhen, Guangdong 518129 (CN); GOU, Wenjin, Shenzhen, Guangdong 518129 (CN)
(74) Representative: Goddar, Heinz J.
(86) International application number: PCT/CN2022/104116
(87) International publication number: WO 2023/093065

(57) **Abstract**

Embodiments of this application provide a data transmission method, a computing device, and a computing system. The computing device includes a first processor, a second processor, and a first network device, the first network device is configured to connect the computing device to a target computing device, and the second processor is configured to run a first process and a second process. The first processor is configured to: receive a command sent by the first process, where the command is used to transmit data to a target process; execute a first command when it is determined, based on the command, that the target process is the second process, to send the data to the second process; and transmit the data to a third process via the first network device when it is determined, based on the command, that the target process is the third process located on the second computing device.

## Description

This application claims priority to Chinese Patent Application No. 202111413487.2, filed with the China National Intellectual Property Administration on November 25, 2021 and entitled "COMMUNICATION ACCELERATION METHOD AND APPARATUS", and Chinese Patent Application No. 202210234247.4, filed with the China National Intellectual Property Administration on March 9, 2022 and entitled "DATA TRANSMISSION METHOD, COMPUTING DEVICE, AND COMPUTING SYSTEM", which are incorporated herein by reference in their entireties.

### TECHNICAL FIELD

This application relates to the field of computer technologies, and specifically, to a data transmission method, a computing device, and a computing system.

### BACKGROUND

In a high-performance computing (High-Performance Computing, HPC) scenario, frequent inter-process communication is required when an HPC cluster executes an application task. The inter-process communication includes inter-core communication within a single computing node in the HPC cluster and network communication between computing nodes. In a conventional technology, both inter-core communication and network communication need to occupy computing resources, reducing efficiency of executing a task by the computing node.

### SUMMARY

Embodiments of this application are intended to provide a data transmission solution, to reduce computing resources occupied during inter-process communication.

A first aspect of this application provides a first computing device, including a first processor, at least one second processor, and a first network device, where the first network device is configured to connect the first computing device to a second computing device, and the at least one second processor is configured to run a first process and a second process; and the first processor is configured to: receive a first command sent by the first process, where the first command is used to transmit data to a target process; execute the first command when it is determined, based on the first command, that the target process is the second process, to send the data to the second process; and transmit the data to a third process via the first network device when it is determined, based on the first command, that the target process is the third process located on the second computing device.

The first processor receives the command, and sends the data to the target process based on the command, so that computing resources of the second processor are saved, and efficiency is improved.

In an implementation, the first process is configured to invoke a message-passing interface MPI to generate a command group, and send the command group to the first processor, where the first command is a command in the command group.

In an implementation, a length of the first data is less than a preset value, the first data is carried in the first command, and the first processor is specifically configured to: generate, based on the first command, a packet including the first data, and send the packet to the second process.

The first processor generates the packet based on the command and sends the packet to the target process, so that computing resources of the second processor are saved and efficiency is improved.

In an implementation, the first processor is specifically configured to: store the first command in a preset queue, to wait to perform matching with a second command sent by the second process, where the second command is used to receive the first data from the first process, and send the first data to the second process after the first command successfully matches the second command.

A message sending command is stored in the preset queue, to wait to perform matching with a message receiving command, so that computing resources of the second processor are saved and efficiency is improved.

In an implementation, a length of the first data is greater than or equal to a preset value, the computing device further includes a memory access device, and the first processor is specifically configured to: generate a packet based on the first command, and send the packet to the memory access device; and the memory access device is configured to transmit the first data to the second process based on the packet.

The first processor generates the packet and sends the packet to the memory access device, to send the data to the target process, so that computing resources of the second processor are saved and efficiency is improved.

In an implementation, the first processor is specifically configured to: generate a packet based on the first command, and send the packet to the first network device; and the first network device is configured to transmit the first data to the third process based on the packet via the second computing device.

The first processor generates the packet and sends the packet to the network device to send the data to the target process, so that computing resources of the second processor are saved and efficiency is improved.

In an implementation, the command group includes a third command, the third command is used to receive second data from a fourth process, and the first processor is further configured to: receive the second data from the second process when the fourth process is the second process; or receive the second data from the third process via the first network device when the fourth process is the third process; and execute the third command when the third command instructs not to process the second data, to send the second data to the first process.

The first processor receives the data sent by the target process and sends the data to the first process, so that computing resources of the second processor are saved and efficiency is improved.

In an implementation, a length of the second data is less than the preset value, and the first processor is further configured to: when the third command instructs to process the second data, process the second data based on the third command to obtain third data, and send the third data to the first process.

The first processor processes the received data and then sends the processed data to the first process, so that computing resources of the second processor are saved and efficiency is improved.

In an implementation, a length of the second data is greater than or equal to the preset value, and the first processor is further configured to: when the third command instructs to process the second data, instruct the memory access device to perform the following operations: processing the second data based on the third command to obtain third data, and transmitting the third data to the first process.

The first processor instructs the memory access device to process the received data and then send the processed data to the first process, so that computing resources of the second processor are saved and efficiency is improved.

A second aspect of this application provides a data transmission method, where the method is executed by a first computing node, the first computing node includes a first processor, at least one second processor, and a first network device, the first network device is configured to connect the first computing node to a second computing node, the at least one second processor runs a first process and a second process, and the method includes: The first processor receives a first command sent by the first process, where the first command is used to transmit first data to a target process; the first processor executes the first command when it is determined, based on the first command, that the target process is the second process, to send the first data to the second process; and the first processor transmits the first data to a third process via the first network device when it is determined, based on the first command, that the target process is the third process located on the second computing node.

In an implementation, the first process invokes a message-passing interface MPI to generate a command group, and send the command group to the first processor, where the first command is a command in the command group.

In an implementation, the command includes a command type and a descriptor, the command type includes any one of the following types: an inline type, a local direct memory access LDMA type, and a remote direct memory access RDMAtype, and a format of the descriptor corresponds to the command type.

In an implementation, a length of the first data is less than a preset value, the first data is carried in the first command, and the sending the first data to the second process includes: The first processor generates, based on the first command, a packet including the first data, and sends the packet to the second process.

In an implementation, the sending the first data to the second process includes: The first processor stores the first command in a preset queue, to wait to perform matching with a second command sent by the second process, where the second command is used to receive the first data from the first process; and the first processor sends the first data to the second process after the first command successfully matches the second command.

In an implementation, a length of the first data is greater than or equal to a preset value, the computing node further includes a memory access device, and the sending the first data to the second process includes: The first processor generates a packet based on the first command, and sends the packet to the memory access device; and the memory access device transmits the first data to the second process based on the packet.

In an implementation, that the first processor transmits the first data to the third process via the first network device includes: The first processor generates a packet based on the first command, and sending the packet to the first network device; and the first network device instructs, based on the packet, the second computing node to transmit the first data to the third process.

In an implementation, the command group includes a third command, the third command is used to receive second data from a fourth process, and the method further includes: The first processor receives the second data from the second process when the fourth process is the second process; or the first processor receives the second data from the third process via the first network device when the fourth process is the third process; and the first processor sends, based on the third command when the third command instructs not to process the second data, the second data to the first process.

In an implementation, a length of the second data is less than the preset value, and the method further includes: When the third command instructs to process the second data, the first processor processes the second data based on the third command to obtain third data, and sends the third data to the first process.

In an implementation, a length of the second data is greater than or equal to the preset value, and the method further includes: When the third command instructs to process the second data, the first processor instructs the memory access device to perform the following operations: processing the second data based on the third command to obtain third data, and transmitting the third data to the first process.

A third aspect of this application provides a chip, including a processing unit and an interface, where the interface is configured to receive a command sent by a first process on a first computing node, the command is used to transmit data to a target process, and the first computing node includes the chip; and the interface is further configured to: send the data to a second process when the processing unit determines, based on the command, that the target process is the second process on the first computing node; and transmit, when it is determined, based on the command, that the target process is the third process on the second computing node, the data to a third process via the first network device on the first computing node.

A fourth aspect of this application provides a computing system, including a first computing node and a second computing node, where the first computing node includes a first processor, a second processor, and a first network device, the first computing node is connected to the second computing node via the first network device, the second processor is configured to run a first process and a second process, the second computing node is configured to run a third process, and the first processor is configured to: receive a command sent by the first process, where the command is used to transmit data to a target process; send the data to the second process when it is determined, based on the command, that the target process is the second process; and transmit the data to a third process via the first network device when it is determined that, based on the command, that the target process is the third process.

### BRIEF DESCRIPTION OF DRAWINGS

Embodiments of this application are described with reference to accompanying drawings, so that embodiments of this application can be clear.
FIG. 1 is a schematic diagram of a computing cluster according to an embodiment of this application;
FIG. 2 is a schematic structural diagram of a computing node according to an embodiment of this application;
FIG. 3 is a flowchart of a data transmission method according to an embodiment of this application;
FIG. 4 is a schematic diagram of inter-process communication corresponding to an MPI-Bcast interface according to an embodiment;
FIG. 5 is a flowchart of a method for inter-process communication of a large packet message corresponding to an MPI-Bcast interface according to an embodiment of this application;
FIG. 6 is a flowchart of a data transmission method according to an embodiment of this application;
FIG. 7 is a schematic diagram of inter-process communication according to an embodiment;
FIG. 8 is a schematic diagram of inter-process communication corresponding to an MPI-Reduce interface according to an embodiment;
FIG. 9 is a flowchart of a method for inter-process communication of a small packet message corresponding to an MPI-Reduce interface according to an embodiment of this application;
FIG. 10 is a schematic diagram of inter-process communication corresponding to an MPI-Reduce interface according to an embodiment;
FIG. 11 is a flowchart of a method for inter-process communication of a large packet message corresponding to an MPI-Reduce interface according to an embodiment of this application; and
FIG. 12 is an architectural diagram of a chip according to an embodiment of this application.

### DESCRIPTION OF EMBODIMENTS

The following describes technical solutions of embodiments in this application with reference to accompanying drawings.

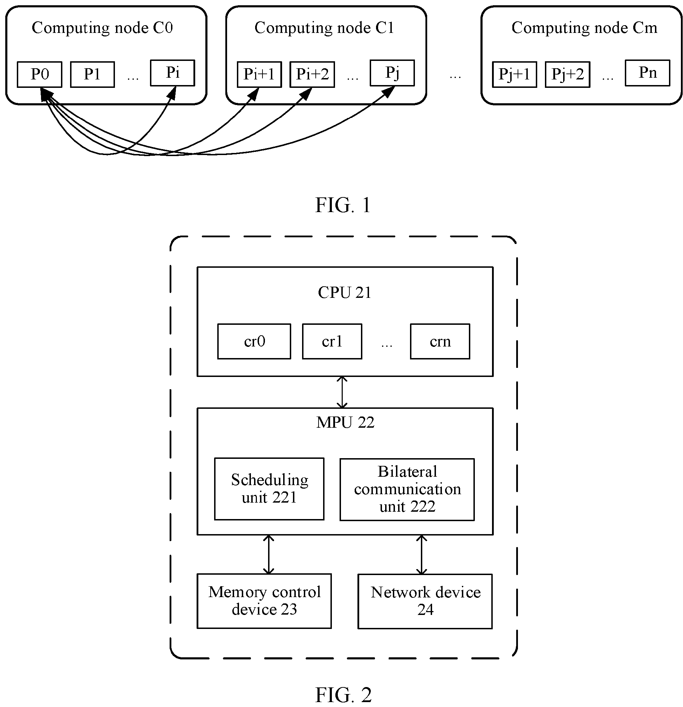

FIG. 1 is a schematic diagram of a computing cluster according to an embodiment of this application. As shown in FIG. 1, the computing cluster includes a plurality of computing nodes, such as a computing node C0, a computing node C1, and a computing node Cm. The computing node is, for example, an application server or a distributed file system server. For example, in a high-performance computing (High-Performance Computing, HPC) scenario (for example, an artificial intelligence (Artificial Intelligence, AI) scenario), each node runs a plurality of processes in parallel. For example, the computing node C0 runs a plurality of processes such as P0, P1, ..., and Pi in parallel, the computing node C1 runs a plurality of processes such as Pi+1, Pi+2, ..., and Pj in parallel, and the computing node Cm runs a plurality of processes such as Pj+1, Pj+2, ..., and Pn in parallel. In addition, as shown in FIG. 1, each process may perform inter-process communication with another process in the local node, or may perform inter-process communication with a process in another node. For example, the process P0 in the computing node C0 performs network communication with the process Pi of the local node and the process Pi+1 in the computing node C1.

In a conventional technology, the computing node C0 runs an application (Application, APP) to generate a computing task, and the computing task may be executed by a plurality of processes. The application may be, for example, an application that requires a large quantity of computing, such as a weather forecast program or a molecular dynamics simulation program. Each process may implement inter-process communication via a message-passing interface (Message-Passing Interface, MPI) provided by the operating system to the application. The MPI includes a point-to-point message passing interface (point-to-point message passing interface), a collective communication interface (collective communication interface), a unilateral communication interface, and the like.

Specifically, the point-to-point message passing interface includes, for example, a send (Send) interface and a receive (Receive, Recv) interface. An input parameter of the send interface includes, for example, current storage address information (for example, a memory address) of a message, an identifier of a process that receives a message, and a message identifier. Optionally, the input parameter of the send interface may further include a communicator (Communicator) identifier. The communicator is preset by an application in the computing device, and includes a group of processes that can communicate with each other. The communicator identifier is a group identifier of a process group. An input parameter of the Recv interface includes, for example, address information (for example, a memory address) for storing a received message, an identifier of a process that sends a message, and a message identifier. Optionally, the input parameter of the Recv interface may further include a communicator identifier.

For example, the process P0 may send a message to the process Pk by invoking the send interface, where the process Pk may be a process in the computing node C0, or may be a process in another computing node. The process P0 provides an input parameter for the send interface, where the input parameter may include an address Addr1 for storing the message, an identifier of the process Pk that receives the message, and a message identifier. After executing the send interface, the CPU in the computing node C0 constructs a corresponding packet according to whether the process Pk is an inter-node process, and sends the packet to the process Pk, where the packet includes information such as an identifier of the process P0 that sends the message, an identifier of the process Pk that receives the message, and a message identifier.

The process Pk can invoke the Recv interface to receive a message sent by the process P0. The process Pk provides an input parameter of the Recv interface, where the input parameter may include an address Addr2 for storing the message, an identifier of the process P0 that sends the message, a message identifier, and the like. It is assumed that the process Pk is a process in the computing node C1. After executing the Recv interface, the CPU in the computing node C1 determines a packet that matches the Recv interface invocation among a plurality of received packets, that is, determines that the identifier of the process P0 that sends the message, the identifier of the process Pk that receives the message, and the message identifier in the packet match the Recv interface invocation, obtains the message from the packet, and stores the message in the address Addr2.

The collective communication interface specifically includes a plurality of types of interfaces, for example, a one-to-many type, a many-to-one type, and a many-to-many type. The one-to-many type interface is used to send a message generated or obtained by a process to all processes in the communicator. The one-to-many type interface includes, for example, an interface such as an MPI-Bcast interface or an MPI-Scatter interface. The many-to-one type interface is used to enable a process to receive messages generated or obtained by all processes in the communicator. The many-to-one type interface includes, for example, an MPI-Gather interface, an MPI-Reduce interface, and the like. The many-to-many type interface is used to enable all processes in the communicator to separately receive messages separately generated or obtained by all the processes. The many-to-many type interface includes, for example, an MPI-Allgather interface, an MPI-Allreduce interface, and the like.

For example, the MPI-Bcast interface is a one-to-many type collective communication interface. The MPI-Bcast interface is used to send a message from a process to all processes in the communicator of the process. An input parameter of the MPI-Bcast interface includes, for example, parameters such as current storage address information of a message to be sent, a message identifier, a root process (root process) identifier, and a communicator identifier. The address information includes, for example, a head address and a message length. A root process is a process corresponding to one in a one-to-many type interface or a process corresponding to one in a many-to-one type interface. Specifically, the process P0 in FIG. 1 may invoke an MPI-Bcast interface to send a message generated by the process P0 to a plurality of processes (for example, processes P0 to Pj) in the communicator. The CPU in the computing node C0 may execute the MPI-Bcast interface, construct a corresponding packet according to whether the process Pk is an inter-node process, and send the packet to each process Pk, where the process Pk may refer to any process of the processes P0 to Pj.

For example, the MPI-Reduce interface is a many-to-one type collective communication interface. The MPI-Reduce interface is used to enable a process to receive a plurality of messages from a plurality of processes, and send a message sum to all processes in the communicator after summing up the plurality of messages and the messages of the process. An input parameter of the MPI-Reduce interface includes, for example, parameters such as address information for storing a message sum, a message identifier, a root process identifier, and a communicator identifier. Specifically, the process P0 in FIG. 1 may invoke an MPI-Reduce interface to obtain a plurality of messages from a plurality of processes (for example, P0 to Pj) in the communicator, sum up the plurality of messages, and send a message sum to P1 to Pj respectively. The CPU in the computing node C0 may execute the MPI-Reduce interface, match packets received from the processes P1 to Pj with invocation of the Recv interface in the computing node C0, and after the matching succeeds, sum up a plurality of messages in the plurality of received packets and a message of the process P0, generate a plurality of packets that are sent to the processes P1 to Pj, and send the plurality of packets to the processes P1 to Pj respectively, to send the message sum to the processes.

It can be seen from the foregoing process that, in a process of inter-process communication, a CPU of a computing node needs to perform a plurality of operations, such as generating a packet, receiving a packet, matching a packet, and computing a received message. In this way, frequent inter-process communication occupies a large quantity of CPU resources, and running efficiency of the computing node is reduced.

Embodiments of this application provide an inter-process communication solution. A message processing unit (Message Processing Unit, MPU) is disposed in a computing node, and an MPU processes inter-process communication in a node and inter-process communication between nodes, thereby saving CPU resources of the computing node and improving computing efficiency of the computing node.

FIG. 2 is a schematic structural diagram of a computing node according to an embodiment of this application. As shown in FIG. 2, using a computing node C0 as an example, the computing node C0 may include a CPU 21, an MPU 22, a memory access device 23, and a network device 24. The CPU 21 includes a plurality of processor cores (cores), for example, a core cr0, a core cr1, ..., and a core crn. The CPU 21 runs a plurality of processes via the plurality of cores, so that the plurality of processes can be run in parallel. It may be understood that although FIG. 2 shows a single CPU, in practice, the computing node may include a plurality of CPUs, each CPU may include a plurality of processor cores, and the plurality of processor cores in the plurality of CPUs may run a plurality of processes in parallel. The method provided in embodiments of this application is also applicable to communication between a plurality of processes that are run by different CPUs in a computing node. In an implementation, the MPU 22 may include an application specific integrated circuit chip (Application Specific Integrated Circuit, ASIC) or a field programmable gate array chip (Field Programmable Gate Array, FPGA), and perform inter-process communication by running of the ASIC chip or the FPGA chip. In another implementation, the MPU 22 may include a microcontroller unit (Microcontroller Unit, MCU) and a storage unit, and the MCU executes code stored in the storage unit to perform inter-process communication. In the following, a component configured to store data in the MPU 22 are collectively referred to as a storage unit. The MPU 22 may include a scheduling unit 221 and a bilateral communication unit 222 through division based on functions. The scheduling unit 221 and the bilateral communication unit 222 are described in detail below.

The memory access device 23 shown in FIG. 2 may store or read data in a memory. In some implementations, the memory access device 23 may further have a simple computing capability. For example, the memory access device 23 may be a local direct memory access (Local Direct Memory Access, LDMA) device. The LDMA device is a hardware control circuit for storing and reading data to a memory, and is a dedicated processor for implementing direct data transmission. The LDMA device may send a bus request signal to the CPU, to take over control of the bus, enter a DMA operation manner, send address information, and perform addressing on the memory, to store or read data to the memory.

The network device shown in FIG. 2 is, for example, a remote direct memory access (Remote Direct Memory Access, RDMA) device, and may specifically include an RDMA-aware network interface controller (RDMA-aware Network Interface Controller, RNIC) and the like. The RDMA is a technology for directly performing remote memory access, and can directly migrate data from a computing node to a memory of another remote computing node, thereby reducing consumption of a CPU in a data transmission process.

The MPU 22 is connected to the CPU 21, the memory access device 23, and the network device 24 via a bus. After a process (or an application) in the computing node C0 invokes any one of the foregoing MPIs, the CPU 21 generates a command group (Command Group) based on the MPI, and sends the command group to the MPU 22, to implement inter-process communication via the MPU 22. For example, after the process P0 in the computing node C0 invokes the Bcast interface, the CPU 21 generates, based on the Bcast interface, a plurality of commands (message sending commands) for sending messages, and sends the plurality of message sending commands to the MPU 22, to separately send data to a plurality of other processes in the process space. The scheduling unit 221 in the MPU 22 may be configured to sequentially execute commands in the command group, and perform data transmission with the CPU 21, the memory access device 23, or the network device 24. The bilateral communication unit 222 may be configured to match a command (a message receiving command) that receives a message received by the MPU 22 with information of a message to be received, to complete receiving of the message.

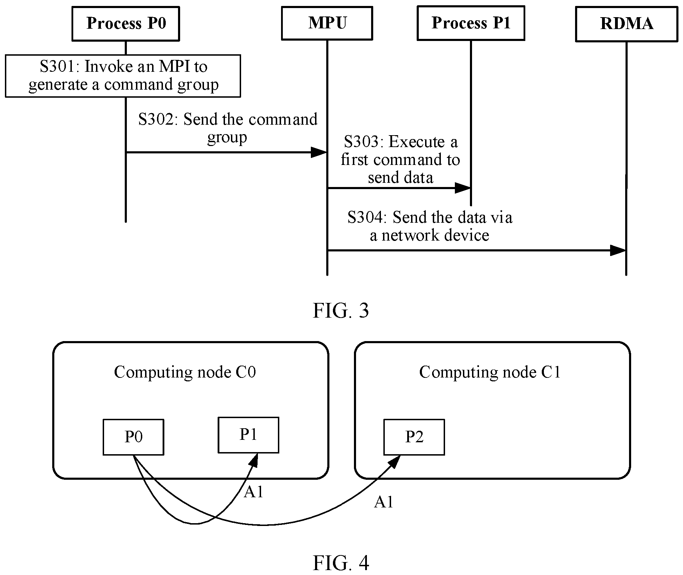

FIG. 3 is a flowchart of a data transmission method according to an embodiment of this application. For example, the method may be performed by a computing node C0. The method includes the following steps.

Step S301: A process P0 invokes an MPI to generate a command group, where a command in the command group is used to transmit data to a target process.

Step S302: The process P0 sends the generated command group to an MPU 22.

Step S303: When it is determined, based on a first command in the command group, that the target process is a process P1, the MPU 22 executes the first command to send the data to the process P1.

Step S304: When it is determined, based on a second command in the command group, that the target process is a process P2 located on a computing node C1, the MPU 22 transmits the data to the process P2 via a network device 24 (which is shown by using RDMA in the figure).

The following describes in detail the steps shown in FIG. 3.

First, in step S301, a process P0 invokes an MPI to generate a command group.

In this embodiment of this application, to adapt to addition of MPU hardware, an MPU adaptation program module (hereinafter referred to as an MPU adaptation module) may be installed in the computing node C0, to generate, in response to invocation of an MPI by a process, a command for execution by the MPU. For example, the process PO in the computing node C0 corresponds to a core cr0, and the process PO may invoke an MPI (for example, an MPI-Bcast interface) based on an MPI provided by the computing node C0 for an application. After the core cr0 invokes the interface, the core cr0 may run the MPU adaptation module, to generate a command group corresponding to the MPI, and the command group is executed by the MPU. In a case in which the command group includes a plurality of commands, an arrangement order of the plurality of commands in the command group indicates an execution order of the commands.

The commands in the command group may have a data structure shown in Table 1.

**Table 1**

| | | | |
|---|---|---|---|
| Command type | Operation type | RSVD | Descriptor |

The command type may be any one of RDMA, LDMA, or inline (inline). The RDMA type indicates that the command is used to perform information exchange with an RDMA device, and a descriptor of the command corresponds to a format of an RDMA packet. The MPU adaptation module may determine, based on an input parameter of the process P0 for the MPI, whether the target process is a process in another node, and when it is determined that the target process is a process in another node, a command type of a command corresponding to the target process is set to the RDMA type. The descriptor may include a send element (Send element, SE) and a receive element (Receive element, RE). The send element in the RDMA type command may include a current storage address of a to-be-sent message, a process identifier for sending a message, an identifier of a computing node that receives a message, a process identifier for receiving a message, a message identifier, and the like. The receive element may include a storage address for storing a received message, an identifier of a computing node that sends a message, a process identifier for sending a message, a process identifier for receiving a message, and the like.

The LDMA type indicates that the command is used to perform information exchange with an LDMA device, and a descriptor of the command corresponds to a format of an LDMA packet. The MPU adaptation module may determine, based on an input parameter of the process P0 for the MPI, whether the target process is a process in another node, and when it is determined that the target process is a process in the computing node C0 and a size of a target message is greater than or equal to a preset value (that is, a large packet message), a command type of a command corresponding to the target process is set to the LDMA type. The send element in the LDMA type command may include a current storage address of a to-be-sent message, a process identifier for sending a message, a process identifier for receiving a message, a message identifier, and the like. The receive element may include a storage address for storing a received message, a process identifier for sending a message, a process identifier for receiving a message, and the like.

The inline type indicates that the command is used to exchange information with a CPU core corresponding to another process on the local node. The MPU adaptation module may determine, based on an input parameter of the process P0 for the MPI, whether the target process is a process in another node, and when it is determined that the target process is a process in the computing node C0 and a size of a target message is less than a preset value (that is, a small packet message), a command type of a command corresponding to the target process is set to the inline type. The descriptor in the inline type command directly includes a message to be sent to another process.

The operation type includes a common type (Common) and a calculation type (Calculate, Calc). The common type indicates that calculation processing is not performed on a message indicated by the descriptor, and the calculation type indicates that calculation processing is performed on a message indicated by the descriptor. When the operation type is the Calc type, an operation type field in the command may further include a subfield, and the subfield indicates a specific calculation of calculation processing to be performed, for example, addition calculation or transposition processing. When the command type is the inline type and the operation type is the calculation type, the command indicates that the MPU performs calculation. When the command type is the LDMA type or the RDMA type, the operation type is the calculation type, and the message in the command is a large packet message, the command indicates that the LDMA performs calculation processing. When the command type is the RDMA type, the operation type is the calculation type, and the message in the command is a small packet message, the command indicates that the MPU performs calculation.

In addition, RSVD is a reserved field. The MPU adaptation module generates a command group provided for the MPU as described above, uses a uniform protocol for inter-node communication and communication between nodes, and indicates, through a command type, whether the command is used for intra-node communication or communication between nodes, so that the MPU does not need to perform protocol switching based on the node on which a communication target process is located.

FIG. 4 is a schematic diagram of inter-process communication corresponding to an MPI-Bcast interface according to an embodiment. As shown in FIG. 4, a process P0 in the computing node C0 may send a message A1 to a process P1 and a process P2 by invoking an MPI-Bcast interface, where the process P1 is also a process in the computing node C0, and the process P2 is a process in the computing node C1.

As described above, an input parameter of the MPI-Bcast interface includes, for example, parameters such as a current storage address addr1 of the to-be-sent message A1, a root process identifier, a message identifier, and a communicator identifier. When invoking the MPI-Bcast interface, the process P0 provides the foregoing input parameter to the MPI-Bcast interface. The root process identifier is an identifier of a process PO, and the communicator identifier is a group identifier of a process group including the process PO, the process P1, and the process P2. The core cr0 corresponding to the process P0 executes the MPU adaptation module after the process P0 invokes the MPI-Bcast interface, and first determines, based on a message length in address information, whether the message is a small packet message or a large packet message. It is assumed that the message in the instance is a small packet message, and the core cr0 reads the message A1 from the address addr1. Then, the core cr0 determines, based on bottom layer information of the communication operation provided by the application, that the process P1 is a process in the computing node C0 on which the process P0 is located and corresponds to the core cr1, and the process P2 is a process in the computing node C1, that is, inter-node communication is performed between the process P1 and the process P0, and communication between nodes is performed between the process P0 and the process P2. Then, the core cr0 may generate, based on the foregoing information, a command group shown in Table 2:

**Table 2**

| | | | |
|---|---|---|---|
| Inline | Common | RSVD | SE1 |
| | | | |
| RDMA | Common | RSVD | SE2 |

The command group includes two commands: an inline type command and an RDMA type command that are sequentially arranged, and an arrangement order of the two commands indicates an execution order of the two commands. In the inline type command, the operation type is a common type, and the descriptor is SE1. The SE1 may include an identifier of a process P1 that receives a message, an identifier of a process P0 that sends a message, a message identifier, a to-be-sent message A1, and the like. The RDMA type command includes the SE2, and the SE2 may include an identifier of the computing node C1 that receives a message, an identifier of the process P2 that receives the message, an identifier of the process P0 that sends a message, an identifier of a message A2, a message A1, and the like. The identifier of the computing node C1 is, for example, a network interface controller identifier of the computing node C1.

In step S302, the process P0 sends the generated command group to an MPU 22.

Specifically, the process P0 instructs, by invoking an MPI-Bcast interface, the core cr0 to send the command group to the MPU 22 after generating the command group. After sending the command group to the MPU 22, the core cr0 may obtain another task (for example, another process) and execute the new task. That is, the MPU performs an inter-process communication operation, which saves CPU resources and improves system efficiency.

In step S303, when it is determined, based on a first command in the command group, that the target process is a process P1, the MPU 22 executes the first command to send the data to the process P1.

Specifically, after receiving the command group in Table 2, the MPU 22 first executes the first command in the command group. After executing the first command, the MPU 22 determines that the target process (the process P1) is a process in the computing node C0, and stores the message sending command in a preset queue of the MPU 22 to wait to perform matching with a message receiving command. The matching includes matching between the SE1 in the message sending command and the process identifier for sending a message, the process identifier for receiving a message, and a message identifier of the RE1 in the message receiving command. The message sending command is stored in the preset queue, to avoid a case in which the MPU returns the message sending command to the CPU because the MPU does not receive the message receiving command, and ensure that the MPU matches the message sending command with the message receiving command.

In addition, the process P1 may invoke an MPI (for example, a Recv interface) to receive the message A1 in the SE1. As described above, an input parameter of the invoked Recv interface includes, for example, address information addr2 for storing the received message A1, an identifier that sends the process P0, and a message identifier. The core cr1 corresponding to the process P1 generates a corresponding message receiving command after invoking the Recv interface, where the message receiving command may include an RE1, and the RE1 includes an identifier of the process P0 that sends a message, an identifier of the process P1 that receives a message, a message identifier, and the like. Then, the core cr1 sends the generated message receiving command to the MPU 22.

After receiving the message receiving command, the scheduling unit 221 in the MPU 22 sends the message receiving command to the bilateral communication unit 222. The bilateral communication unit 222 determines whether a message sending command matching the message receiving command is stored in a preset queue in the storage unit of the MPU 22, and if no, the bilateral communication unit 222 determines again, after waiting for a preset time, whether a matched message sending command is stored in the preset queue.

In a case in which the message sending command and the message receiving command are successfully matched, the bilateral communication unit 222 may notify the scheduling unit 221, and the scheduling unit 221 obtains the message A1 from the SE1 and generates an inline packet which is directly sent to the core cr0 corresponding to the process P1, where the inline packet includes, for example, an identifier of a process PO that sends a message, an identifier of a process P1 that receives a message, and a to-be-sent message A1. Then, the MPU 22 sends the inline packet to the core cr1. The core cr1 may store a message in the received packet into the message storage address Addr2 in the RE1 in the message receiving command, to complete inter-node communication between the process P0 and the process P1, that is, data sending from the process P0 to the process P1. Communication between the process P0 and the process P1 is performed through the foregoing process. The MPU 22 replaces the CPU to perform matching between the message sending command and the message receiving command, and after the matching succeeds, an inline packet is generated and sent to the core cr1, thereby reducing occupation of CPU resources.

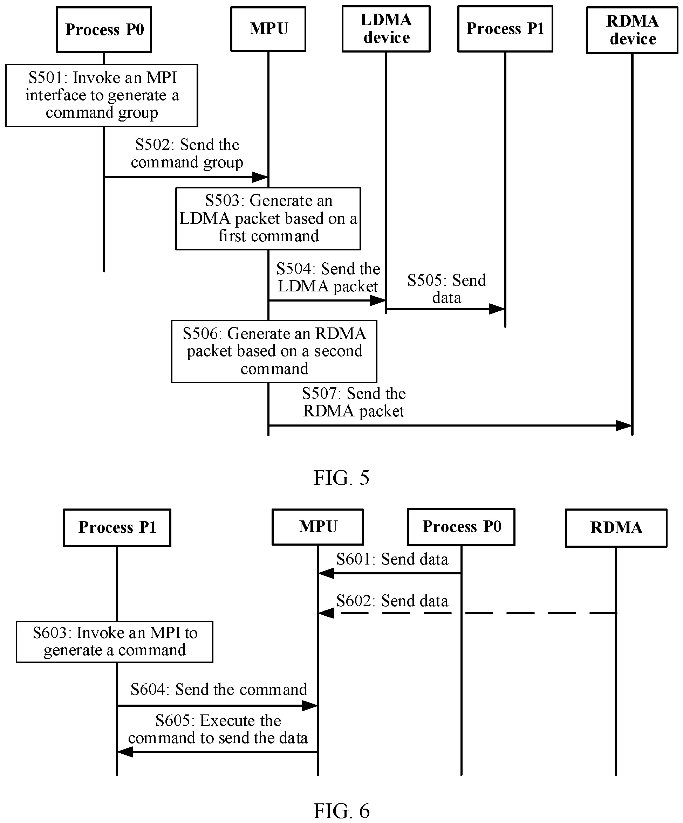

It may be understood that the MPU 22 is not limited to sending the small packet message sent by the process P0 to the process P1 through the foregoing process, and may also send the large packet message sent by the process P0 to the target process by executing the first command. The process is described in detail below with reference to FIG. 5.

In step S304, when it is determined, based on a second command in the command group, that the target process is a process P2 located on the computing node C1, the MPU 22 sends the data to the network device 24 (for example, an RDMA device), to transmit the data to the process P2.

Specifically, the MPU 22 executes the second command in the command group, and after determining that the target process (the process P2) is the process in the computing node C1, the scheduling unit 221 generates, based on the SE2 in the command, the RDMA packet that is used to be sent to the RDMA device. The RDMA packet includes, for example, a message A1, an identifier of a process P0 that sends the message A1, an identifier of a computing node C1 that receives the message A1, and an identifier of a process P2 that receives the message A1. Then, the MPU 22 sends the RDMA packet to the RDMA device of the computing node C0.

After receiving the RDMA packet, the RDMA device of the computing node C0 generates a packet sent to the RDMA device of the computing node C1, where the packet includes the message A1, the identifier of the process P0 that sends the message, the identifier of the computing node C1 that receives the message, the identifier of the process P2 that receives the message, and the like. After receiving the packet, the RDMA device of the computing node C1 may send the packet to the MPU in the computing node C1. After successfully matching the packet with the message receiving command sent by the process P2, the bilateral communication unit in the MPU of the computing node C1 may send the message to the process P2, to complete communication between the process P0 and the process P2.

If an error occurs when the MPU executes any command in the command group, the MPU may notify the MPU adaptation module, and then the MPU adaptation module processes the error.

FIG. 5 is a flowchart of a method for inter-process communication of a large packet message corresponding to an MPI-Bcast interface according to an embodiment of this application. The method may be executed by the computing node C0.

As shown in FIG. 5, first, in step S501, a process P0 invokes an MPI to generate a command group.

Similar to the procedure described with reference to FIG. 3, the process P0 may send a message A1 to the process P1 and the process P2 by invoking an MPI-Bcast interface. An input parameter of the MPI-Bcast interface includes, for example, parameters such as a current memory address addr1 of the to-be-sent message A1, an identifier of the root process P0, a message identifier, and a communicator identifier. The core cr0 corresponding to the process P0 executes the MPU adaptation module after the process PO invokes the MPI-Bcast interface, and first determines, based on a message length in address information, whether the message A1 to be sent is a small packet message or a large packet message. It is assumed that the message in this instance is a large packet message. Then, the core cr0 determines, based on bottom layer information of the communication operation provided by the application, that the process P1 is a process in the computing node C0 on which the process P0 is located and corresponds to the core cr1, and the process P2 is a process in the computing node C1, that is, inter-node communication is performed between the process P1 and the process P0, and communication between nodes is performed between the process P0 and the process P2. Then, the core cr0 may generate, based on the foregoing information, a command group shown in Table 3:

**Table 3**

| | | | |
|---|---|---|---|
| LDMA | Common | RSVD | SE3 |
| | | | |
| RDMA | Common | RSVD | SE4 |

The command group includes two commands: an LDMA type command and an RDMA type command that are sequentially arranged, and an arrangement order of the two commands indicates an execution order of the two commands. In the LDMA type command, the operation type is the ordinary type, and the descriptor is an SE3. The SE3 may include an identifier of a process P 1 that receives a message, an identifier of a process P0 that sends a message, an identifier of a message A1, a storage address addr1 of a to-be-sent message A1, and the like. The RDMA type command includes an SE4, and the SE4 may include an identifier of a process P2 that receives a message, an identifier of a process P0 that sends a message, an identifier of a message A1, a storage address addr1 of a to-be-sent message A1, and the like.

In step S502, the process P0 sends the command group shown in Table 3 to the MPU 22. For this step, reference may be made to the foregoing descriptions of step S302. Details are not described herein again.

In step S503, the MPU 22 generates an LDMA packet based on the first command in the command group.

Specifically, after receiving the command group in Table 3, the MPU 22 first executes the first command in the command group. After executing the first command, the MPU 22 stores the message sending command in a preset queue in the storage unit of the MPU 22 to wait to perform matching with a message receiving command. The matching includes matching between the SE3 in the message sending command and the process identifier for sending a message, the process identifier for receiving a message, and a message identifier of the RE in the message receiving command.

The process P1 may invoke an MPI (for example, a Recv interface) to receive the message A1 in the SE1. As described above, the input parameter of the Recv interface includes, for example, a memory address addr2 for storing the message A1, an identifier of the process P0 that sends the message, and an identifier of the message A1. After invoking the Recv interface, the core cr1 corresponding to the process P1 generates a corresponding message receiving command, where the message receiving command may include an RE, and the RE includes an identifier of the process P0 that sends a message, an identifier of the process P1 that receives a message, an identifier of the message A1, an address addr2 for storing the message A1, and the like. Then, the core cr1 sends the generated message receiving command to the MPU 22. After receiving the message receiving command, the scheduling unit 221 in the MPU 22 sends the message receiving command to the bilateral communication unit 222, and the bilateral communication unit 222 determines whether a message sending command matching the message receiving command is stored in the preset queue of the MPU 22.

The bilateral communication unit 222 notifies the scheduling unit 221 in a case in which the message sending command successfully matches the message receiving command, and the scheduling unit 221 generates, based on the message sending command and the message receiving command, an LDMA packet used to be sent to the LDMA device. The LDMA packet includes, for example, an identifier of a process PO that sends a message, an identifier of a process P1 that receives a message, a current storage address addr1 of the message A1, and an address addr2 for storing the message A1.

In step S504, the MPU 22 sends the LDMA packet to an LDMA device.

In step S505, the LDMA device sends the data to the process P1 based on the LDMA packet.

Specifically, after receiving the LDMA packet, the LDMA device obtains the message A1 from the address addr1, and stores the message A1 in the address addr2, to complete data transmission between the process P0 and the process P1. Communication between the process P0 and the process P1 is performed through the foregoing process, and the MPU 22 replaces the CPU to perform matching between the SE in the message sending command and the RE in the message receiving command, generates an LDMA packet, and instructs the LDMA device to transfer a message between different addresses, thereby reducing occupation of CPU resources.

In step S506, the MPU 22 executes a second command (that is, an RDMA type message sending command) in the command group, and generates an RDMA packet based on the command. In step S508, the MPU 22 sends the RDMA packet to the RDMA device, to send the data to the process P2 in the computing node C1. For steps S506 and S507, reference may be made to the foregoing description of step S304. Details are not described herein again.

FIG. 6 is a flowchart of a data transmission method according to an embodiment of this application. For example, the method may be performed by a computing node C0. The method includes the following steps.

In step S601, a process P0 sends data to an MPU 22.

In step S602, an RDMA device sends second data to the MPU 22.

In step S603, a process P1 invokes an MPI to generate a command, where the command is used to receive data from a target process.

In step S604, the process P1 sends the generated command to the MPU 22.

In step S605, the MPU 22 executes the command to send the data to the process P1.

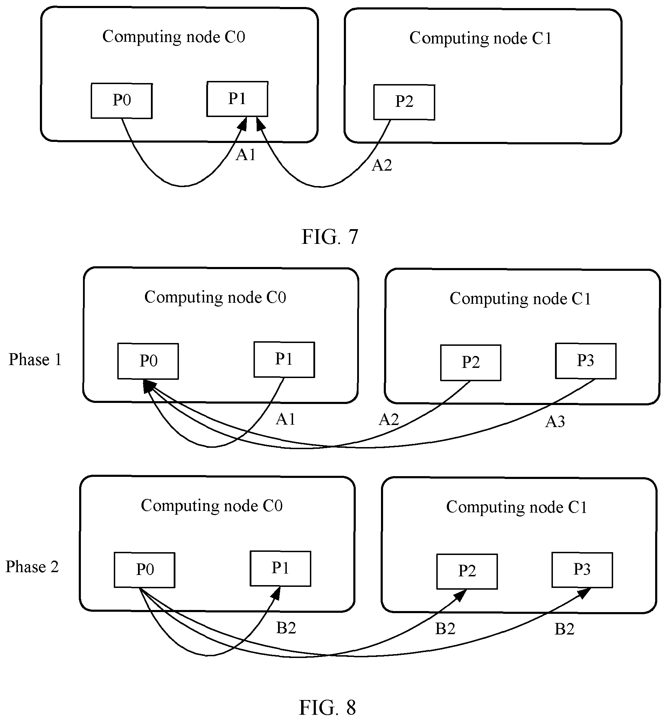

FIG. 7 is a schematic diagram of inter-process communication according to an embodiment. As shown in FIG. 7, the process P1 in the computing node C0 may receive a message A1 from the process P0 by invoking a Recv interface, and the process P1 may further receive a message A2 from the process P2 by invoking a Recv interface. The process P0 and the process P1 are processes in the computing node C0, and the process P2 is a process in the computing node C1.

The following describes steps shown in FIG. 6 with reference to FIG. 7.

First, in step S601, a process P0 sends data to an MPU 22.

The process P0 may invoke the MPI interface to send the message A1 to the process P1 by using the method shown in FIG. 3, so that as described above, a message sending command may be generated. The process PO sends the message sending command to the MPU 22, to send the message A1 to the MPU 22. The sending the message A1 to the MPU 22 includes: sending the message A1 to the MPU 22 directly in a case that the message A1 is a small packet message, or sending a storage address of the message A1 to the MPU 22 in a case that the message A1 is a large packet message.

In step S602, an RDMA device sends data to the MPU 22.

Referring to FIG. 7, the process P2 in the computing node C1 may send the message A2 to the RDMA device in the computing node C0 by using the method shown in FIG. 3, so that the RDMA device may send the message A2 to the MPU 22.

In step S603, a process P1 invokes an MPI to generate a command, where the command is used to receive data from a target process. In step S604, the process P1 sends the generated command to the MPU 22.

The process P1 may receive the message A1 or the message A2 by invoking the Recv interface. As described above, when the process P1 invokes the Recv interface, the input parameter provided for the Recv interface includes, for example, address information (for example, a memory address addr1) for storing a received message, an identifier of a process that sends a message (process P0 or process P2), and a message identifier (A1 or A2).

The core cr1 corresponding to the process P1 executes the MPU adaptation module after the process P1 invokes the Recv interface. For invocation of the Recv interface used to receive A1, the core cr1 first determines whether the message is a small packet message or a large packet message based on a message length in the address information. It is assumed that the message in the instance is a small packet message, the core cr1 may generate the following command:

| | | | |
|---|---|---|---|
| Inline | Common | RSVD | RE1 |

The RE1 includes an address addr1 used to store the received message, an identifier of the process P0 that sends the message, an identifier of the process P1 that receives the message, and an identifier of the message A1.

For invocation of the Recv interface used to receive A2, and the core cr1 may generate the following command:

| | | | |
|---|---|---|---|
| RDMA | Common | RSVD | RE2 |

The RE2 includes an address addr2 used to store the received message, an identifier of the process P2 that sends the message, an identifier of the process P1 that receives the message, and an identifier of the message A2.

In step S605, the MPU 22 executes the command to send the data to the process P1.

After receiving the command, the MPU 22 matches the identifier of the process that sends a message, the identifier of the process that receives a message, and a message identifier in the RE1 or the RE2 with the information of the received data (the message A1 or the message A2), and sends the data to the process P1 after the matching succeeds. For example, for the foregoing command used to receive the message A1, the MPU 22 may generate a packet including the message A1, and send the packet to the core cr1. The core cr1 stores the packet into the address addr1 in the command, to send the message A1 to the process P1. For the command used to receive the message A2, the MPU 22 may instruct the LDMA device to transfer the message A2 from the current storage address to the address addr2 in the command.

FIG. 8 is a schematic diagram of inter-process communication corresponding to an MPI-Reduce interface according to an embodiment. As shown in FIG. 8, inter-process communication corresponding to an MPI-Reduce interface includes two phases: a phase 1 and a phase 2. In the phase 1, other processes (for example, the process P1, the process P2, and the process P3) in the communicator respectively send respective messages (A1, A2, and A3) to the root process (for example, the process P0). After receiving the plurality of messages, the root process P0 performs addition calculation on the plurality of messages (A1, A2, and A3 and a message A0 of the process P0, to obtain a sum of all messages. In the phase 2, the process P0 sends the message sum B2 to the process P1, the process P2, and the process P3 respectively. The process P0 in the computing node C0 may perform the foregoing process by invoking an MPI-Reduce interface.

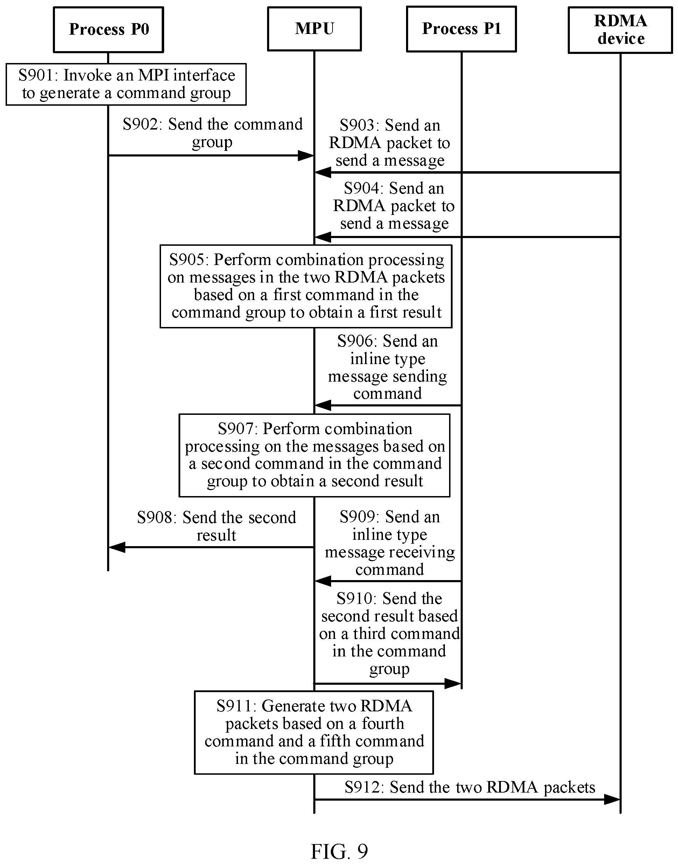

FIG. 9 is a flowchart of a method for inter-process communication of a small packet message corresponding to an MPI-Reduce interface according to an embodiment of this application. The process is executed by, for example, the computing node C0.

As shown in FIG. 9, first, in step S901, the process P0 invokes an MPI-Reduce interface to generate a command group.

The process P0 in the computing node C0 may invoke an MPI-Reduce interface based on an MPI provided by a system for an application. After executing invocation of the interface, the core cr0 may run the MPU adaptation module, to generate a command group corresponding to the MPI-Reduce interface.

Specifically, as described above, an input parameter of the MPI-Reduce interface, for example, includes parameters such as a current storage address addr1 of a message A0 of the process P0, an address addr2 for storing a message sum, a message identifier, an identifier of a root process P0, and a communicator identifier, where the communicator identifier indicates a process group formed by the process PO, the process P1, the process P2, and the process P3. After the core cr0 executes the invocation of the MPI-Reduce interface by the process PO, the core cr0 first determines, based on the message length in the address information, whether the message to be processed is a small packet message or a large packet message. It is assumed that the message in this instance is a small packet message. Then, the core cr0 determines, based on bottom layer information, that the process P1 is a process in the computing node C0 on which the process P0 is located and corresponds to the core cr1, and the process P2 and the process P3 are processes in the computing node C1, that is, inter-node communication is performed between the process P1 and the process P0, and communication between nodes is performed between the process P0 and the process P2 and the process P3. Then, the core cr0 may generate, based on the foregoing information, a command group shown in Table 4:

**Table 4**

| | | | | |
|---|---|---|---|---|
| RDMA | Calc (SUM) | RSVD | RE2 | RE3 |
| | | | | |
| Inline | Calc (SUM) | RSVD | RE1 | |
| | | | | |
| Inline | Common | RSVD | SE1 | |

| | | | |
|---|---|---|---|
| RDMA | Common | RSVD | SE2 |
| | | | |
| RDMA | Common | RSVD | SE3 |

The command group includes five commands that are sequentially arranged, and an arrangement order of the five commands indicates an execution sequence of the five commands. The first command includes an RE2 and an RE3. The RE2 may include an identifier of a process P2 that sends the message A2, an identifier of a process P0 that receives the message A2, an identifier of the message A2, a storage address addr2 for storing the received message A2, and the like. The RE3 may include an identifier of the computing node C1 that sends the message A3, an identifier of the process P3 that sends the message A3, an identifier of the process P0 that receives the message A3, an identifier of the message A3, a storage address addr2 for storing the received message A3, and the like. The command type "RDMA" in the first command is used to instruct to receive the message A2 and the message A3 from the RDMA device, and the operation type "Calc" is used to instruct to perform calculation on the two received messages. A sub-field "SUM" of the operation type may indicate that the calculation is specifically an addition calculation.

When executing the first command, the MPU 22 may determine, based on a size of a to-be-received message, whether the calculation is performed by the MPU 22 or the LDMA device. The second command includes an RE1, and the RE1 may include an identifier of a process P1 that sends the message A1, an identifier of a process P0 that receives the message A1, an identifier of the message A1, and an identifier of a message sum of the message A0, the message A2, and the message A3. The command type "inline" in the second command is used to instruct to receive the message A1 from the core cr1 corresponding to the process P1, and the sub-field "SUM" of the operation type "Calc" is used to instruct the MPU 22 to perform addition calculation on the message A1 and the message A0, and a message sum B1 of the message A2 and the message A3 received from the core cr1, to obtain a message sum B2 of four messages (A0, A1, A2, and A3).

For the third command to the fifth command in Table 4, reference may be made to the foregoing description of the commands in Table 2, where addresses of currently stored messages in the SE1 to the SE3 may be addresses addr2 in the RE1 to the RE3.

In step S902, the process P0 sends the command group to an MPU 22.

In step S903, an RDMA device sends an RDMA packet to the MPU 22, where the RDMA packet includes a message A2 sent by a process P2 in a computing node C1 to a process P0.

In the computing node C1, the process P2 may invoke a send interface or an MPI-Bcast interface to send the message A2 to the process P0. After running the interface, similar to the foregoing content, the core cr2 corresponding to the process P2 may generate an RDMA type command and send the command to the MPU, so that the MPU generates an RDMA packet based on the command, and sends the RDMA packet to the RDMA device of the computing node C1, where the RDMA packet includes an identifier of the process P2 that sends the message A2, an identifier of the process P1 that receives the message A2, the message A2, an identifier of the message A2, and the like. After receiving the RDMA packet, the RDMA device of the computing node C1 generates a packet sent to the RDMA device of the computing node C0, where the packet includes the identifier of the process P2 that sends the message A2, the identifier of the process P0 that receives the message A2, the message A2, the identifier of the message A2, and the like. After receiving the packet sent by the RDMA device of the computing node C1, the RDMA device of the computing node C0 generates, in a case in which it is determined that a size of the message A2 is less than a preset value, an RDMA packet sent to the MPU 22, where the RDMA packet includes the identifier of the process P2 that sends the message A2, the identifier of the process P0 that receives the message A2, the message A2, the identifier of the message A2, and the like.

After receiving the RDMA packet, the MPU 22 stores the RDMA packet in a preset queue of a storage unit of the MPU 22, to wait to perform matching with the message receiving command.

In step S904, the RDMA device sends the RDMA packet to the MPU 22, where the RDMA packet includes related information of the message A3 sent by the process P3 in the computing node C1 to the process P0. For this step, reference may be made to the foregoing descriptions of step S703. Details are not described herein again.

In step S905, the MPU 22 performs combination processing on messages in the two RDMA packets based on the first command (that is, the first command) in the command group, to obtain a first result B 1.

After receiving the command group shown in Table 4, the MPU 22 first executes the first command. After executing the first command, the scheduling unit 221 in the MPU 22 sends the first command to the bilateral communication unit 222. The bilateral communication unit 222 determines, in a preset queue, whether an RDMA packet that matches the RE2 and the RE3 in the command is received, where the matching includes matching between the RE2 or the RE3 and a process identifier for sending a message, a process identifier for receiving a message, and a message identifier in the RDMA packet.

After successfully matching the RE2 with the RDMA packet received at the first time, the bilateral communication unit 222 notifies the scheduling unit 221. After successfully matching the RE3 with the RDMA packet received at the second time, the bilateral communication unit 222 notifies the scheduling unit 221. The scheduling unit 221 obtains the message A2 and the message A3 from the RDMA packets received at the two times, and calculates a sum of the message A2 and the message A3 to obtain a first result A2+A3=B1, and stores the first result B1 into a storage unit in the MPU 22.

In step S906, the process P1 sends an inline type message sending command to the MPU 22, where the message sending command may include an identifier of the process P1 that sends the message A1, an identifier of the process P0 that receives the message A1, an identifier of the message A1, and the message A1.

The process P1 may invoke an MPI (for example, a send interface) to send a message A1 to the process P0. As described above, the input parameter of the send interface includes, for example, the current storage address information of the message A1, the identifier of the process P0 that receives the message A1, and the identifier of the message A1. After the core cr1 corresponding to the process P1 invokes the send interface, the core cr1 reads the message A1 and generates an inline type message sending command, where the message sending command may include an identifier of the process P1 that sends the message A1, an identifier of the process P0 that receives the message A1, an identifier of the message A1, and the message A1. Then, the core cr1 sends the generated message sending command to the MPU 22. After receiving the message sending command, the MPU 22 stores the message sending command in a preset queue of a storage unit in the MPU 22, to wait to perform matching with the message receiving command.

In step S907, the MPU 22 performs combined processing on the first result B1, the message A1 in the message sending command, and the message A0 of the process P0 based on a second command (that is, the inline message receiving command) in the command group and the received inline message sending command to obtain a second result B2.

Specifically, the MPU 22 executes the second command in Table 4, and after executing the second command, the scheduling unit 221 in the MPU 22 sends the second command to the bilateral communication unit 222. The bilateral communication unit 222 determines, in the preset queue, whether an inline message sending command matching the message receiving command is received, where the matching includes matching between the RE1 in the message receiving command and a process identifier for sending a message, a process identifier for receiving a message, and a message identifier in the SE in the message sending command.

After the RE1 successfully matches the received message sending command, the bilateral communication unit 222 notifies the scheduling unit 221. The scheduling unit 221 obtains the message A0 from the RE1, reads the first result B1 from the MPU 22 based on the RE1, obtains the message A1 from the SE1, and calculates a sum of the message A1, the first result B1, and the message A0, to obtain a second result A1+B1+A0=B2.

In step S908, the MPU 22 sends the second result to the process P0. Specifically, the MPU 22 generates an inline packet including the second result, and sends the inline packet to the core cr0. After receiving the inline packet, the core cr0 may obtain the second result, and store the second result into the address addr2 based on the address addr2 in the RE1, so that the process P0 may obtain the second result.

In step S909, the process P1 sends an inline type message receiving command to the MPU 22. In step S910, the MPU 22 executes a third command in Table 4 and sends the second result B2 to the process P1. Specifically, after the inline type message receiving command successfully matches the third command, an inline packet is generated, where the inline packet includes the second result B2, and the inline packet is sent to the core Cr1 corresponding to the process P1, and the core Cr1 stores the second result B2 in the address of the inline type message receiving command. In step S911, the MPU 22 generates, based on the RDMA type message sending command (that is, a fourth command and a fifth command) in the command group, two RDMA packets used to be sent to the RDMA device. In step S912, the MPU 22 sends the generated two RDMA packets to the RDMA device, to separately send the two RDMA packets to the process P2 and the process P3. For step S911 to step S915, reference may be made to the foregoing description of FIG. 3. Details are not described herein again.

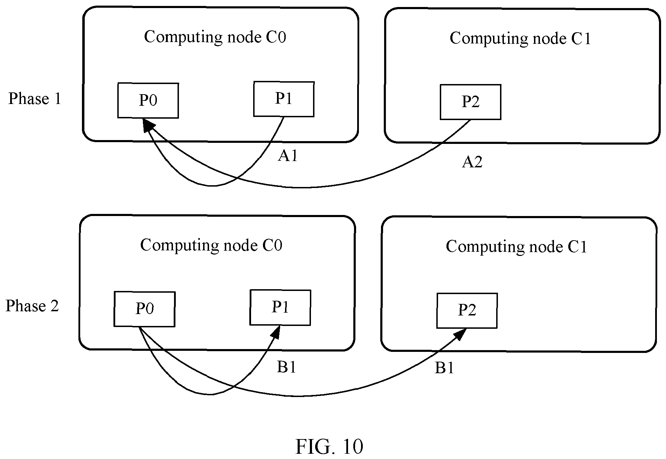

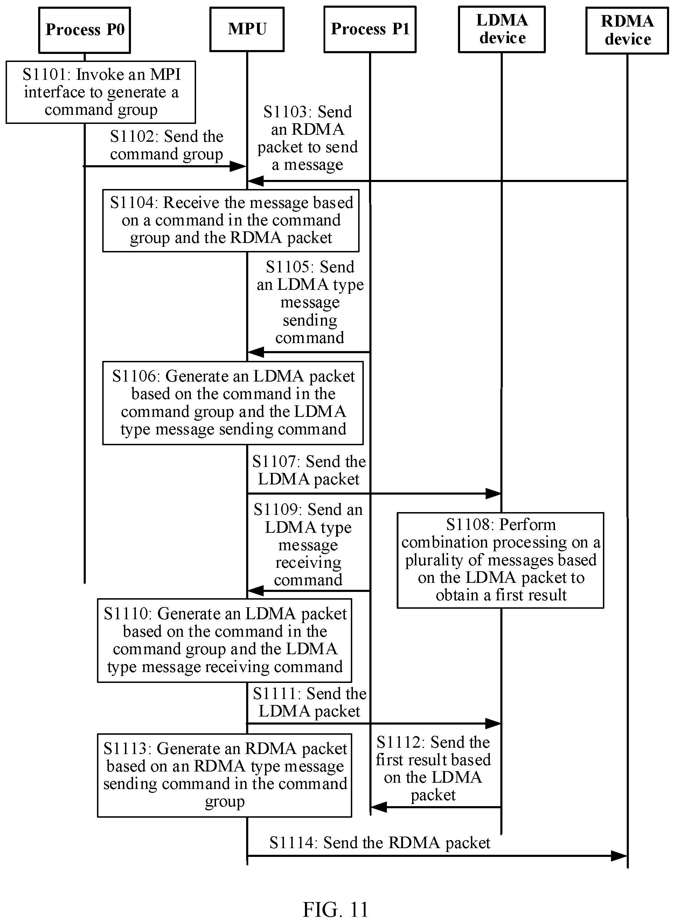

FIG. 10 is a schematic diagram of inter-process communication corresponding to an MPI-Reduce interface according to an embodiment. As shown in FIG. 10, in the phase 1, other processes (for example, the process P1 and the process P2) in the communicator respectively send respective messages (A1 and A2) to the root process (for example, the process P0). After receiving the plurality of messages, the root process P0 performs addition calculation on the message A1, the message A2, and a message A0 of the process P0, to obtain a sum B1 of all messages. In the phase 2, the process P0 sends the message sum B1 to the process P1 and the process P2 respectively. The process P0 in the computing node C0 may perform the foregoing process by invoking an MPI-Reduce interface. The inter-process communication diagram shown in FIG. 10 corresponds to the inter-process communication procedure shown in FIG. 11.

FIG. 11 is a flowchart of a method for inter-process communication of a large packet message corresponding to an MPI-Reduce interface according to an embodiment of this application. The process is executed by, for example, the computing node C0.

As shown in FIG. 11, first, in step S1101, the process P0 invokes an MPI-Reduce interface to generate a command group.

The process P0 in the computing node C0 may invoke an MPI-Reduce interface based on an MPI provided by a system for an application. After executing invocation of the interface, the core cr0 may run the MPU adaptation module, to generate a command group corresponding to the MPI-Reduce interface.

Specifically, as described above, an input parameter of the MPI-Reduce interface, for example, includes parameters such as a current storage address addr1 of a message A0 of the process P0, an address addr2 for storing a message sum, a message identifier, an identifier of a root process P0, and a communicator identifier. The communicator identifier indicates a process group including the process PO, the process P1, and the process P2. The core cr0 executes the MPU adaptation module after executing the invocation of the MPI-Reduce interface by the process PO, and the core cr0 first determines, based on the message length in the address information, whether the message to be processed is a small packet message or a large packet message. It is assumed that the message in this instance is a large packet message. Then, the core cr0 determines, based on bottom layer information corresponding to the communication operation, that the process P1 is a process in the computing node C0 on which the process P0 is located and corresponds to the core cr1, and the process P2 is a process in the computing node C1, that is, inter-node communication is performed between the process P1 and the process P0, and communication between nodes is performed between the process P0 and the process P2. Then, the core cr0 may generate, based on the foregoing information, a command group shown in Table 5:

**Table 5**

| | | | |
|---|---|---|---|
| RDMA | Common | RSVD | RE2 |
| | | | |
| LDMA | Calc (SUM) | RSVD | RE1 |
| | | | |
| LDMA | Common | RSVD | SE1 |
| | | | |
| RDMA | Common | RSVD | SE2 |

The command group includes four commands that are sequentially arranged, and an arrangement order of the four commands indicates an execution sequence of the four commands. The first command includes an RE2, and the RE2 may include an identifier of a process P2 that sends the message A2, an identifier of a process P0 that receives the message A2, an identifier of the message A2, a storage address addr2 for storing the received message A2, and the like. In the first command, the command type "RDMA" instructs to receive the message A2 from the RDMA device, and the operation type "Normal" instructs to receive but not to process the message. The second command includes an RE1, and the RE1 may include an identifier of a process P1 that sends the message A1, an identifier of a process P0 that receives the message A1, an identifier of the message A1, an address addr2 for storing the message sum, a current storage address addr1 of the message A0, and the like. The command type "LDMA" in the second command instructs to receive a message A1 from the LDMA device, and the operation type "Calc" is used to instruct the LDMA device to perform addition calculation on the received message A1, the received message A0, and the message A2 stored in the address addr2, to obtain a message sum B1 of three messages, and store the message sum B1 in the address addr2 in the RE1.

For the third command and the fourth command in Table 5, reference may be made to the foregoing description of the commands in Table 3, where the address of the currently stored message in the SE1 and the SE2 may be the address addr2 used to store the message sum B1 in the RE1.

In step S1102, the process P0 sends the command group to an MPU 22.

In step S1103, the RDMA device sends the RDMA packet to the MPU 22, where the RDMA packet includes related information of the message A2 sent by the process P2 in the computing node C1 to the process P0. This step is different from step S903 in FIG. 9 in that because the message A2 is a large packet message, the RDMA packet does not include the message A2.

In step S1104, the MPU 22 receives a command receiving message based on the RDMA type message in the command group.

After receiving the RDMA packet, the MPU 22 may match the message receiving command (that is, the first command) in the command group with the RDMA packet. After the matching succeeds, the MPU 22 instructs the RDMA device to store the message A2 in the memory address Addr2 used to store the received message in the message receiving command based on the instruction in the RDMA packet.

In step S1105, the process P1 sends an LDMA type message sending command to the MPU 22.

Similar to the foregoing content, the process P1 may invoke an MPI (for example, a send interface) to send the message A1 to the process P0. As described above, the input parameter of the send interface includes, for example, the current storage address addr4 of the message A1, the identifier of the process P0 that receives the message A1, and the identifier of the message A1. After invoking the send interface, the core cr1 corresponding to the process P1 generates a message sending command, where the message sending command may include an identifier of the process P1 that sends the message A1, an identifier of the process P0 that receives the message A1, an identifier of the message A1, a current storage address addr4 of the message A1, and the like. Then, the core cr1 sends the generated message sending command to the MPU 22. After receiving the message sending command, the MPU 22 stores the message sending command into the storage unit in the MPU 22 to wait to perform matching.

In step S1106, the MPU 22 generates an LDMA packet based on the LDMA type message receiving command (that is, a second command) and the LDMA type message sending command in the command group.

Specifically, after the MPU 22 executes the second command in Table 5, the scheduling unit 221 in the MPU 22 sends the second command to the bilateral communication unit 222 after executing the second command. The bilateral communication unit 222 determines, in the preset queue of the storage unit, whether a message sending command matching the message receiving command is received, where the matching includes matching between the RE in the message receiving command and a process identifier for sending a message, a process identifier for receiving a message, and a message identifier in the SE in the message sending command.

After the second command successfully matches the message sending command sent by the process P1, the MPU 22 generates an LDMA packet based on the operation type "Calc", to instruct the LDMA device to add the message A0, the message A1, and the message A2. The LDMA packet may include a storage address addr1 of the message A0, a storage address addr2 of the message A2, a storage address addr4 of the message A1, and an indication for adding the message A0, the message A1, and the message A2.

In step S1107, the MPU 22 sends the LDMA packet to an LDMA device.

In step S1108, the LDMA device performs combination processing on the plurality of messages based on the LDMA packet to obtain a first result B1.

Specifically, after receiving the LDMA packet, the LDMA device reads the message A0 from the address addr1, reads the message A2 from the address addr2, and reads the message A1 from the address addr4 based on an indication of the LDMA packet, obtains a sum B1 of A0, A1, and A2 through calculation, and stores the message sum B1 in the address addr2 in the second command. Therefore, the process P0 may obtain the first result B1.

In step S1109, the process P1 sends an LDMA type message receiving command to the MPU 22. In step S1110, after the LDMA type message receiving command successfully matches the LDMA type message sending command (that is, a third command) in the command group, the MPU 22 generates an LDMA packet, where a current storage address of a message in the LDMA packet may be the address addr2. In step S1111, the MPU 22 sends the generated LDMA packet to the LDMA device. In step S1112, the LDMA device sends the first result B1 to the process P1 based on the LDMA packet. Specifically, the first result B1 is transferred from the address addr2 to the address in the LDMA type message receiving command. In step S1113, the MPU 22 generates an RDMA packet based on the RDMA type message sending command (that is, a fourth command) in the command group, and in step S1114, the MPU 22 sends the RDMA packet to the RDMA device. For step S1109 to step S1114, reference may be made to the foregoing description of FIG. 5. Details are not described herein again.

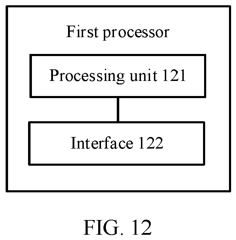

FIG. 12 is an architectural diagram of a chip according to an embodiment of this application. The chip includes a processing unit 121 and an interface 122.

The interface 122 is configured to receive a command sent by a first process on a first computing node, the command is used to transmit data to a target process, and the first computing node includes the chip; and

The interface 122 is further configured to send the data to a second process when the processing unit 121 determines, based on the command, that the target process is the second process on the first computing node; and transmit the data to the third process via the first network device on the first computing node when it is determined that, based on the command, that the target process is the third process on the second computing node.

It should be understood that terms such as "first" and "second" in this specification is used to achieve simplicity in distinguishing similar concepts, and do not constitute any limitation.

A person skilled in the art may clearly understand that, descriptions of embodiments provided in this application may be mutually referenced. For ease and brevity of description, for example, for functions of the apparatuses and devices and performed steps that are provided in embodiments of this application, refer to related descriptions in method embodiments of this application. Reference can also be made between various method embodiments and between various apparatus embodiments.

A person skilled in the art may understand that all or some of the steps of the method embodiments may be implemented by a program instructing related hardware. The program may be stored in a computer-readable storage medium. When the program runs, all or a part of the steps of the method embodiments are performed. The foregoing storage medium includes: any medium that can store program code, such as a read-only memory (read-only memory, ROM), a random-access memory (random-access memory, RAM), a magnetic disk, or an optical disc.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium, a semiconductor medium (for example, a solid state disk (Solid State Disk, SSD)), or the like.

In the several embodiments provided in this application, it should be understood that the disclosed apparatus and method may be implemented in other manners without departing from the scope of this application. For example, the described embodiments are merely examples. For example, division into the modules or units is merely logical function division and may be other division in actual implementation. For example, a plurality of units or components may be combined or integrated into another system, or some features may be ignored or not performed. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. A person of ordinary skill in the art may understand and implement embodiments of the present invention without creative efforts.

In addition, the apparatus and method described herein, and schematic diagrams of different embodiments can be combined or integrated with other systems, modules, technologies, or methods without departing from the scope of this application. In addition, the displayed or discussed mutual couplings or direct couplings or communication connections may be implemented via some interfaces. The indirect couplings or communication connections between the apparatuses or units may be implemented in electronic, mechanical, or other forms.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A first computing device, comprising a first processor, at least one second processor, and a first network device, wherein
the first network device is configured to connect the first computing device to a second computing device, and the at least one second processor is configured to run a first process and a second process; and
the first processor is configured to:
receive a first command sent by the first process, wherein the first command is used to transmit first data to a target process;
execute the first command when it is determined, based on the first command, that the target process is the second process, to send the first data to the second process; and
transmit the first data to a third process via the first network device when it is determined, based on the first command, that the target process is the third process located on the second computing device.

2. The computing device according to claim 1, wherein
the first process is configured to invoke a message-passing interface MPI to generate a command group, and send the command group to the first processor, wherein the first command is a command in the command group.

3. The computing device according to claim 1 or 2, wherein a length of the first data is less than a preset value, the first data is carried in the first command, and the first processor is specifically configured to:
generate, based on the first command, a packet comprising the first data, and send the packet to the second process.

4. The computing device according to claim 3, wherein the first processor is specifically configured to:
store the first command in a preset queue, to wait to perform matching with a second command sent by the second process, wherein the second command is used to receive the first data from the first process, and send the first data to the second process after the first command successfully matches the second command.

5. The computing device according to claim 1 or 2, wherein a length of the first data is greater than or equal to a preset value, the computing device further comprises a memory access device, and the first processor is specifically configured to:
generate a packet based on the first command, and send the packet to the memory access device; and
the memory access device is configured to transmit the first data to the second process based on the packet.

6. The computing device according to claim 1 or 2, wherein the first processor is specifically configured to:
generate a packet based on the first command, and send the packet to the first network device; and
the first network device is configured to transmit the first data to the third process based on the packet via the second computing device.

7. The computing device according to claim 5, wherein the command group comprises a third command, the third command is used to receive second data from a fourth process, and the first processor is further configured to:
receive the second data from the second process when the fourth process is the second process; or
receive the second data from the third process via the first network device when the fourth process is the third process; and
execute the third command when the third command instructs not to process the second data, to send the second data to the first process.

8. The computing device according to claim 7, wherein a length of the second data is less than the preset value, and the first processor is further configured to: when the third command instructs to process the second data, process the second data based on the third command to obtain third data, and send the third data to the first process.

9. The computing device according to claim 7, wherein a length of the second data is greater than or equal to the preset value, and the first processor is further configured to: when the third command instructs to process the second data, instruct the memory access device to perform the following operations: processing the second data based on the third command to obtain third data, and transmitting the third data to the first process.

10. A data transmission method, wherein the method is performed by a first computing node, the first computing node comprises a first processor, at least one second processor, and a first network device, the first network device is configured to connect the first computing node to a second computing node, the at least one second processor runs a first process and a second process, and the method comprises:
receiving, by the first processor, a first command sent by the first process, wherein the first command is used to transmit first data to a target process;
executing, by the first processor, the first command when it is determined, based on the first command, that the target process is the second process, to send the first data to the second process; and
transmitting, by the first processor, the first data to a third process via the first network device when it is determined, based on the first command, that the target process is the third process located on the second computing node.

11. The method according to claim 10, wherein the first process invokes a message-passing interface MPI to generate a command group, and send the command group to the first processor, wherein the first command is a command in the command group.

12. The method according to claim 10 or 11, wherein a length of the first data is less than a preset value, the first data is carried in the first command, and the sending the first data to the second process comprises:
generating, by the first processor based on the first command, a packet comprising the first data, and sending the packet to the second process.

13. The method according to claim 12, wherein the sending the first data to the second process comprises:
storing, by the first processor, the first command in a preset queue, to wait to perform matching with a second command sent by the second process, wherein the second command is used to receive the first data from the first process; and
sending, by the first processor, the first data to the second process after the first command successfully matches the second command.

14. The method according to claim 10 or 11, wherein a length of the first data is greater than or equal to a preset value, the computing node further comprises a memory access device, and the sending the first data to the second process comprises:
generating, by the first processor, a packet based on the first command, and sending the packet to the memory access device; and
transmitting, by the memory access device, the first data to the second process based on the packet.

15. The method according to claim 10 or 11, wherein the transmitting, by the first processor, the first data to the third process via the first network device comprises:
generating, by the first processor, a packet based on the first command, and sending the packet to the first network device; and
transmitting, by the first network device, the first data to the third process based on the packet via the second computing node.

16. The method according to claim 14, wherein the command group comprises a third command, the third command is used to receive second data from a fourth process, and the method further comprises:
receiving, by the first processor, the second data from the second process when the fourth process is the second process; or
receiving, by the first processor, the second data from the third process via the first network device when the fourth process is the third process; and
executing, by the first processor, the third command when the third command instructs not to process the second data, to send the second data to the first process.

17. The method according to claim 16, wherein a length of the second data is less than the preset value, and the method further comprises: when the third command instructs to process the second data, processing, by the first processor, the second data based on the third command to obtain third data, and sending the third data to the first process.

18. The method according to claim 16, wherein a length of the second data is greater than or equal to the preset value, and the method further comprises: when the third command instructs to process the second data, instructing, by the first processor, the memory access device to perform the following operations: processing the second data based on the third command to obtain third data, and transmitting the third data to the first process.

19. A computing system, comprising a first computing node and a second computing node, wherein the first computing node comprises a first processor, a second processor, and a first network device, the first computing node is connected to the second computing node via the first network device, the second processor is configured to run a first process and a second process, and the second computing node is configured to run a third process; and
the first processor is configured to: receive a command sent by the first process, wherein the command is used to transmit data to a target process; send the data to the second process when it is determined, based on the command, that the target process is the second process; and transmit the data to the third process via the first network device when it is determined, based on the command, that the target process is the third process.
